# FASCICULE DE BREVET EUROPEEN

(11) **EP 4 291 467 B1**
(45) Date de publication et mention de la délivrance du brevet: **16.09.2026**
(21) Numéro de dépôt: 22705418.6
(22) Date de dépôt: 14.01.2022
(51) Int. Cl.: B62D 25/20

(54) **VÉHICULES À MOTORISATION ÉLECTRIQUE HYBRIDE POURVUS D'UN DISPOSITIF DE RENFORT RELIÉ AU BRANCARD AVANT**
HYBRIDELEKTROFAHRZEUGE MIT EINER VERSTÄRKUNGSVORRICHTUNG, DIE AN DAS VORDERSEITIGE ELEMENT ANGESCHLOSSEN IST
HYBRID ELECTRIC VEHICLES WITH A REINFORCING DEVICE CONNECTED TO THE FRONT SIDE MEMBER

(30) Priorité: 10.02.2021 FR 2101268
(43) Date de publication de la demande: 20.12.2023
(73) Titulaire: Stellantis Auto SAS, 78300 Poissy (FR)
(72) Inventeur: PERU, Marc, 92290 Chatenay Malabry (FR); FONFREDE, Stephane, 90000 Belfort (FR); VALTIER, Alain, 78770 Autouillet (FR); BOSSUAT, Damien, 78310 Maurepas (FR); ZEITOUNI, Richard, 78390 Bois D Arcy (FR)
(74) Mandataire: BCIP
(86) Numéro de dépôt international: PCT/FR2022/050086
(87) Numéro de publication internationale: WO 2022/171943

(56) Documents cités:
- DE-A1- 102010 039 109
- US-A1- 2013 341 969

## Description

La présente invention concerne le domaine des véhicules à motorisation électrique hybride.

Les véhicules automobiles de type hybride comprennent un moteur thermique en plus d'un moteur électrique. Les deux moteurs fonctionnent simultanément ou alternativement de manière à réduire la puissance totale consommée par le véhicule. La batterie du moteur électrique est de forme généralement parallélépipédique, et est soit implantée sous le plancher du véhicule, au niveau de la traverse d'assise avant, soit logée en partie arrière du véhicule, dans le coffre ou sous la caisse.

Dans le cas d'une implantation sous le plancher du véhicule, la batterie a généralement une taille limitée et a une masse généralement inférieure à 150 kg. Cette configuration est celle de véhicules hybrides présentant une autonomie réduite. On parle d'une motorisation de type MHEV (en anglais « *Mild Hybrid Electric Vehicle* »). Ces véhicules hybrides ont une batterie qui permet d'assister le moteur thermique.

Dans le cas d'un logement en partie arrière du véhicule, il est possible d'installer des batteries plus volumineuses et donc ayant une masse supérieure à 150 kg, voire supérieure à 250 kg. Ce type de véhicules hybrides présente une autonomie plus importante que les véhicule de type MHEV, car la batterie est une batterie rechargeable qui peut être rechargée à une source externe de courant. On parle alors d'une motorisation de type PHEV (en anglais « *Plug-in Hybrid Electric Vehicle »).*

Lorsque la batterie est implantée sous le plancher, celle-ci doit par exemple enjamber le brancard avant sous-plancher, ce qui limite la taille des batteries pouvant être implantées. Une solution pour augmenter la taille des batteries sous-plancher d'un véhicule est non pas d'enjamber les brancards sous-plancher mais de les couper. Cependant, en cas de choc frontal, le relais pour le passage d'effort est alors pris par la coque de la batterie ou par des cadres de protection conçus et agencés à cet effet. Néanmoins, le fait de couper les brancards sous-plancher présente le risque de dégrader la tenue du soubassement lors des chocs frontaux, notamment en augmentant la probabilité du cisaillement du plancher.

Par ailleurs, en cas de choc violent, il y a un risque important que les brancards reculent jusqu'à entrer en contact avec les coques de protection des batteries ou « bac de batteries », ce qui n'est pas souhaitable au vu des risques liés à un endommagement des batteries suite à un perçage dudit bac de batterie.

Lorsque la batterie est logée en partie arrière du véhicule, cela permet d'augmenter considérablement la masse de la batterie et donc sa puissance. Cependant, en cas de choc frontal, le relais pour le passage d'effort est généralement pris par la planche à talon qui est placée sous le plancher en avant de la batterie. Selon la gravité du choc, le plancher peut également se cisailler, car la batterie, à cause de sa masse importante, va pousser et venir écraser le plancher.

Afin de renforcer le plancher, le document DE 102014006718 décrit la présence d'une structure de renfort disposée de manière s'étendant transversalement entre le tunnel et les longerons et s'étendant longitudinalement depuis une partie arrière du tunnel jusqu'à une partie avant des longerons. Cette structure de renfort permet d'obtenir un plancher présentant une certaine résistance lors d'un choc frontal avec un chevauchement de faible largeur. Cette configuration particulière permet notamment d'éviter l'intrusion des roues avant dans l'habitacle du véhicule lors d'un choc frontal à faible recouvrement. Le document DE 10 2010 039109 A1 divulgue le préambule de la revendication 1.

Néanmoins, s'il est possible d'imbriquer un accumulateur d'énergie au sein de la structure de renfort décrite, le déplacement des brancards sous-plancher lors d'un choc frontal n'est pas pris en compte et une telle structure ne résout pas le problème dans le cas où cet accumulateur d'énergie serait logé dans la zone arrière du véhicule.

L'invention a pour objectif d'améliorer la situation antérieure. En particulier, l'invention cherche à trouver un moyen pour dissiper l'énergie introduite par un choc frontal sur les brancards de sorte à diminuer ou à éviter le cisaillement du plancher d'un véhicule électrique hybride.

A cet effet, et selon un premier aspect, l'invention a pour objet un véhicule à motorisation électrique hybride comprenant un plancher avec un tunnel central, au moins deux longerons longitudinaux disposés respectivement au niveau de chaque bord latéral du plancher, une planche à talon s'étendant sous-plancher et transversalement entre lesdits au moins deux longerons, au moins deux brancards s'étendant sous-plancher en direction de ladite planche à talon dont au moins deux brancards avant disposés de part et d'autre du tunnel central, ledit véhicule est remarquable en ce qu'il comprend en outre un ou plusieurs dispositifs de renfort choisis parmi au moins un dispositif de contournement et/ou au moins un dispositif d'ancrage, en ce que le ou les dispositifs de renfort sont des corps allongés comprenant deux extrémités définissant une extrémité avant et une extrémité arrière, une desdites extrémités étant fixée à un brancard, et en ce que le ou les dispositifs de renforts sont fixés sous le plancher du véhicule et sont agencés pour s'étendre selon une direction faisant un angle avec la direction longitudinale du véhicule. Le véhicule comprend en outre au moins un dispositif d'ancrage fixé à un brancard avant par son extrémité avant et à la planche à talon par son extrémité arrière, l'extrémité arrière étant contiguë à un longeron et/ou le véhicule comprend en outre un brancard sous-plancher intérieur s'étendant parallèlement à un brancard avant et disposé entre ledit brancard avant et le tunnel central, et le véhicule comprend au moins un dispositif d'ancrage fixé à un brancard avant par son extrémité avant et à la planche à talon par son extrémité arrière, l'extrémité arrière étant contiguë audit brancard intérieur.

Comme on l'aura compris à la lecture de la définition qui vient d'en être donnée, l'invention propose la création d'au moins une voie d'effort supplémentaire afin d'alléger l'effort subit par le ou les brancards en cas de choc frontal. L'énergie reçue lors de l'impact est dissipée via le ou les dispositifs de renforts et n'est plus dirigée directement vers l'arrière du véhicule sur la planche à talon. Grâce à l'ajout de dispositifs de renfort selon la configuration de l'invention, le chemin des efforts subit est rallongé, ce qui permet la dissipation d'énergie et donc d'alléger les charges sur la planche à talon et d'éviter aussi le cisaillement du plancher, dans la limite de la violence du choc frontal.

Selon un premier mode de réalisation, le véhicule comprend en outre au moins un brancard sous-plancher extérieur s'étendant parallèlement à un brancard avant et disposé entre ledit brancard avant et un longeron, et comprend au moins un dispositif de contournement fixé à un brancard extérieur par une de ses extrémités. De préférence, au moins un dispositif de contournement est fixé au brancard extérieur par son extrémité avant. De préférence, au moins un dispositif de contournement est fixé au brancard avant par son extrémité arrière.

De préférence, le véhicule comprend en outre une batterie implantée sous le plancher, et au moins un brancard avant ou un brancard extérieur est un brancard coupé ; un brancard coupé comprenant deux parties définissant une partie avant et une partie arrière entre lesquelles la batterie est disposée, la partie arrière comprenant une extrémité arrière fixée à la planche à talon, et au moins un dispositif de contournement est fixé à la partie arrière d'un brancard coupé. Par exemple, au moins un brancard coupé est un brancard avant.

Avantageusement, le véhicule comprend au moins un dispositif de renfort mixte comprenant un dispositif de contournement et un dispositif d'ancrage placés bout à bout de manière à former une pièce unique, le ou les dispositifs de renfort mixtes étant fixés à un brancard extérieur par leur extrémité avant et à la planche à talon par leur extrémité arrière. De préférence, au moins un dispositif de renfort mixte est configuré pour enjamber un brancard avant et s'y fixer.

Selon un second mode de réalisation, alternatif au premier mode de réalisation, le véhicule comprend une batterie logée à l'arrière de la planche à talon et au moins deux dispositifs d'ancrage sont fixés sur un même brancard avant.

Quel que soit le mode de réalisation choisi, les caractéristiques suivantes définissent avantageusement le ou les dispositifs de renfort :

De préférence, au moins un dispositif de renfort est un corps creux.

De préférence, au moins un dispositif de renfort montre une hauteur inférieure à 30 mm, ou inférieure à 25 mm, ou inférieur à 20 mm.

De préférence, le ou les dispositifs de renfort sont des pièces en acier ; par exemple, des pièces en acier montrant une résistance à la traction comprise entre 400 et 1200 MPa telle que déterminée par la norme ISO 6892-1, ou entre 500 et 1100 MPa, ou entre 600 et 1000 MPa.

De préférence, le ou les dispositifs de renfort sont des profilés en forme de U et au moins une des extrémités desdits profilés montre un coude.

Aussi, quel que soit le mode de réalisation choisi, le véhicule comprend de préférence au moins un dispositif d'ancrage fixé à un brancard avant par son extrémité avant et à la planche à talon par son extrémité arrière. Par exemple, au moins deux dispositifs d'ancrage sont fixés sur un même brancard avant.

Aussi, quel que soit le mode de réalisation choisi, le véhicule comprend par exemple une traverse d'assise arrière disposée sur le plancher, une desdites extrémités du ou des dispositifs de renfort est fixée à un brancard avant en dessous de la traverse d'assise arrière.

L'invention sera bien comprise et d'autres aspects et avantages apparaîtront clairement à la lecture de la description qui suit donnée en référence à la planche de dessins annexée sur laquelle :
[Fig. 1] La figure 1 est une vue du dessous du plancher d'un véhicule à motorisation électrique hybride de type MHEV selon l'invention.
[Fig. 2] La figure 2 est une vue du dessous du plancher d'un véhicule à motorisation électrique hybride de type PHEV selon l'invention.
[Fig. 3] La figure 3 montre un dispositif de renfort selon l'invention.

Dans la suite de la description, le terme « comprendre » est synonyme de « inclure » et n'est pas limitatif en ce qu'il autorise la présence d'autres éléments dans le véhicule auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Les termes « longitudinal », « transversal », « avant » et « arrière » s'entendront par rapport à l'orientation générale du véhicule tel que pris selon son sens normal de marche.

Sur les différentes figures, les mêmes références désignent des éléments identiques ou similaires.

Lors d'un choc frontal, les brancards sous plancher d'un véhicule transmettent l'énergie vers l'arrière dudit véhicule. Dans le cas d'un véhicule à motorisation électrique hybride, où la protection de la batterie est une condition *sine qua non à* la sécurité des occupants, il est nécessaire de faire en sorte que l'énergie soit dissipée afin de, dans la limite de la violence du choc frontal, conserver l'intégrité du plancher ce qui permet de ne pas impacter la batterie proprement dite lors du choc. Ainsi, l'invention, en fixant sur les brancards un ou plusieurs dispositifs de renfort sous-plancher et en les agençant pour s'étendre selon une direction faisant un angle avec la direction longitudinale du véhicule, permet de dissiper l'énergie vers l'arrière dudit véhicule. Le cisaillement du plancher est alors réduit, voire supprimé car la déformation des éléments de structure du véhicule est contenue.

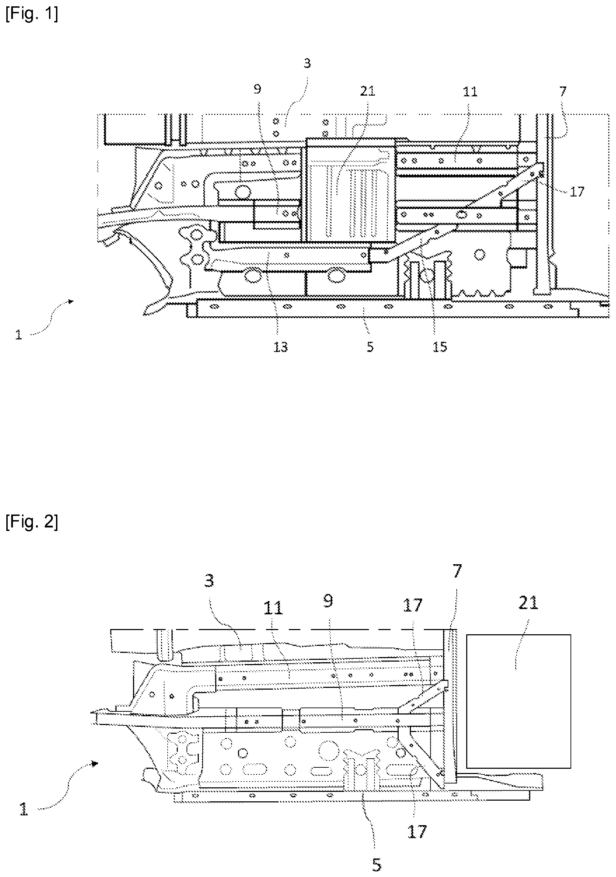

L'invention a donc trait à un véhicule à motorisation électrique hybride dont le plancher 1 est montré par dessous aux figures 1 et 2. Le plancher 1 comprend donc un tunnel 3 central, au moins deux longerons 5 longitudinaux disposés respectivement au niveau de chaque bord latéral du plancher 1, une planche à talon 7 s'étendant sous-plancher et transversalement entre lesdits au moins deux longerons 5 (un seul est représenté sur chacune des figures 1 et 2), au moins deux brancards (9, 11, 13) s'étendant sous-plancher en direction de ladite planche à talon 7 dont au moins deux brancards avant 9 disposés de part et d'autre du tunnel 3 central (un seul est représenté sur chacune des figures 1 et 2). Le véhicule selon l'invention comprend en outre un ou plusieurs dispositifs de renfort (15, 17) choisis parmi au moins un dispositif de contournement 15 et/ou au moins un dispositif d'ancrage 17, le ou les dispositifs de renfort (15, 17) étant des corps allongés comprenant deux extrémités définissant une extrémité avant et une extrémité arrière, une desdites extrémités étant fixée à un brancard (9, 11, 13). De plus, le ou les dispositifs de renforts (15, 17) sont fixés sous le plancher 1 du véhicule et sont agencés pour s'étendre selon une direction faisant un angle avec la direction longitudinale du véhicule.

Par exemple, au moins un dispositif de renfort est un corps creux.

Le ou les dispositifs de renfort montrent par exemple une hauteur inférieure à 30 mm, ou inférieure à 25 mm, ou inférieur à 20 mm. Cette distance permet de conserver une garde au sol suffisante pour le plancher du véhicule.

Le ou les dispositifs de renfort sont avantageusement des pièces en acier ; par exemple, des pièces en acier montrant une résistance à la traction comprise entre 400 et 1200 MPa telle que déterminée par la norme ISO 6892-1, ou entre 450 et 1150 MPa, ou entre 500 et 1100 MPa, ou entre 550 et 1050 MPa, ou entre 600 et 1000 MPa. Le ou les dispositifs de renfort sont par exemple fixés sur le plancher, à l'un des brancards et/ou à la planche à talon par soudage, de préférence au moyen de points de soudure électriques.

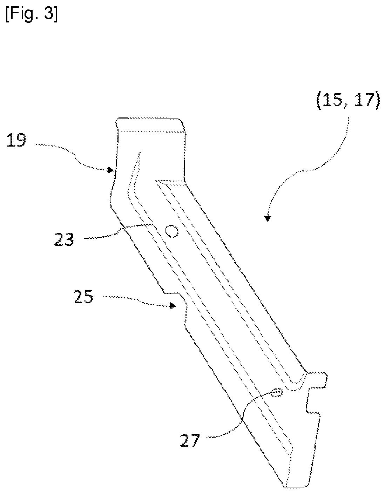

Le ou les dispositifs de renfort sont avantageusement des profilés en forme de U et au moins une des extrémités desdits profilés montre un coude 19, visible sur la figure 3, et permettant de se poser sur les faces latérales des brancards et/ou sur la face latérale de la planche à talon, notamment la face latérale tournée vers l'avant du véhicule. Le ou les dispositifs de renfort sont alors fixés sur l'un des brancards et/ou la planche à talon au niveau du coude 19 par soudage, en particulier au moyen de points de soudure électriques. Il est néanmoins possible de les fixer par tout moyen ; par exemple, par vissage.

La figure 3 permet aussi de visualiser la présence d'au moins un relief de renfort 23 aménagé selon la direction principale du ou des dispositifs de renfort. La présence de ce relief participe à garantir une raideur adéquate du ou des dispositifs de renfort.

Comme le ou les dispositifs de renfort sont fixés sous le plancher, le ou les dispositifs peuvent être amenés à superposer des câbles et/ou à se superposer à des moulures montrées par le plancher. Dès lors, au moins un des bords du ou des dispositifs de renfort selon l'invention peuvent présenter au moins une encoche 25 destinée à faire passer le ou les câbles et/ou la ou les moulures du plancher.

Enfin, le ou les dispositifs de renfort peuvent disposer d'un ou plusieurs trous 27, qui sont utilisés lors du procédé de cataphorèse afin d'éliminer l'excès de peinture.

Parmi les dispositifs de renfort, le dispositif de contournement est disposé de manière à éviter que l'effort soit dirigé directement contre un élément particulier du véhicule, par exemple une batterie ou la planche à talon. Le dispositif de contournement peut aussi servir à rediriger l'effort subit par le véhicule sur un autre élément de structure du véhicule.

Le dispositif d'ancrage est quant à lui disposé de manière à éviter que des éléments de structure, tels que la planche à talon, ne se déforment lors du choc au point de provoquer le cisaillement du plancher. Il est disposé de sorte à répartir l'effort en différents endroits de l'élément de structure.

Le ou les dispositifs de renfort sont agencés pour s'étendre selon une direction faisant un angle avec la direction longitudinale du véhicule. Par exemple, cet angle peut être compris entre 20° et 70°, ou entre 30° et 60°, ou entre 35° et 55°.

Avantageusement, il est intéressant que le véhicule comprenne au moins un dispositif d'ancrage 17 fixé au brancard avant 9 par son extrémité avant et à la planche à talon 7 par son extrémité arrière. En effet, lors d'un choc frontal, un brancard en étant relié à la planche à talon est susceptible de transmettre l'effort sur celle-ci. La présence d'un dispositif d'ancrage 17 fixé d'une extrémité au brancard avant et de l'autre extrémité à la planche à talon crée un endroit supplémentaire sur la planche à talon 7 où l'effort peut être transmis, ce qui allège les charges sur la planche à talon car l'énergie induite dans la structure du véhicule va se dissiper au moins en partie.

Plus préférentiellement, le véhicule comprend au moins deux dispositifs d'ancrage 17 fixés sur le même brancard avant 9. Cela permet d'obtenir trois endroits sur la planche à talon où l'effort peut être transmis en cas de choc frontal.

Par exemple, le véhicule comprend au moins un dispositif d'ancrage 17 fixé à un brancard avant 9 par son extrémité avant et à la planche à talon 7 par son extrémité arrière, l'extrémité arrière étant contiguë à un longeron 5. Le fait d'éloigner l'endroit où le dispositif d'ancrage se fixe sur la planche à talon par rapport à l'endroit où le brancard avant se fixe sur la planche à talon permet d'optimiser encore plus la dissipation de l'énergie induite lors du choc frontal et de réduire encore plus les charges sur la planche à talon.

Par exemple, le véhicule comprend un brancard sous-plancher intérieur 11 qui s'étend parallèlement à un brancard avant 9 et qui est disposé entre ledit brancard avant 9 et le tunnel 3 central. Dans ce cas, le véhicule peut comprendre au moins un dispositif d'ancrage 17 fixé à un brancard avant 9 par son extrémité avant et à la planche à talon 7 par son extrémité arrière, l'extrémité arrière étant contiguë audit brancard intérieur 11.

Il est préférable de fixer le ou les dispositifs de renforts aux brancards, par exemple au brancard avant 9, à un endroit qui est situé en dessous (c'est-à-dire à la verticale) de la traverse arrière du véhicule, celle étant disposée sur le plancher.

Selon un premier mode de réalisation, illustré en figure 1, le véhicule à motorisation électrique hybride est de type MHEV. Ce véhicule comprend au moins un brancard sous-plancher extérieur 13 qui s'étend parallèlement à un brancard avant 9 et qui est disposé entre ledit brancard avant 9 et un longeron 5. Le véhicule comprend au moins un dispositif de contournement 15 fixé à un brancard avant 9 par une de ses extrémités et à un brancard extérieur 13 par son autre extrémité.

Le ou les dispositifs de contournement 15 offrent donc une voie d'effort supplémentaire afin que l'effort subi par les brancards extérieurs ne soit pas dirigé directement sur la planche à talon 7.

Par exemple, le véhicule de type MHEV comprend une batterie 21 implantée sous le plancher, ce qui implique qu'au moins l'un des brancards avant 9 ou extérieur 13 soit un brancard coupé, de préférence le brancard avant 9. Par exemple, la batterie 21 peut être implantée sous le plancher en dessous de la traverse d'assise avant. Le brancard coupé comprend deux parties qui définissent une partie avant et une partie arrière entre lesquelles la batterie 21 est disposée, la partie arrière comprenant une extrémité arrière fixée à la planche à talon 7. Avantageusement, au moins un dispositif de contournement 15 est fixé à la partie arrière d'un brancard coupé et l'énergie induite lors du choc frontal, dans la limite de la violence du choc, va alors contourner la batterie et non-plus provoquer l'intrusion du ou des brancards dans ladite batterie. De préférence, ledit au moins un dispositif de contournement 15 est fixé au brancard extérieur 13 par son extrémité avant.

Lorsque le véhicule électrique hybride de type MHEV comprend avantageusement au moins un dispositif d'ancrage, il est possible d'associer le dispositif de contournement 15 et un dispositif d'ancrage 17. Les deux dispositifs sont placés bout à bout et peuvent donc être rattachés par soudage, par exemple via la formation de points de soudure électriques. On obtient alors un dispositif de renfort mixte, comprenant les deux dispositifs placés bout à bout. Le dispositif de renfort mixte est fixé au brancard extérieur par son extrémité avant et à la planche à talon par son extrémité arrière.

Avantageusement, il peut être économique que le dispositif de renfort mixte soit une pièce unique. Cela permet de simplifier le montage de ces dispositifs sur le véhicule. De préférence, le dispositif de renfort mixte est configuré pour enjamber un brancard avant et s'y fixer.

Selon un deuxième mode de réalisation, illustré en figure 2, le véhicule à motorisation électrique hybride est de type PHEV. Ce véhicule comprend une batterie 21 logée à l'arrière de la planche à talon 7 et au moins deux dispositifs d'ancrage 17 sont fixés sur un même brancard avant 9.

Lors d'un choc frontal, l'énergie induite dans le véhicule va donc être dispersée en trois endroits différents sur la planche à talon, permettant d'alléger la charge sur celle-ci et de réduire, voire supprimer le cisaillement du plancher.

## Revendications

1. Véhicule à motorisation électrique hybride comprenant un plancher (1) avec un tunnel (3) central, au moins deux longerons (5) longitudinaux disposés respectivement au niveau de chaque bord latéral du plancher (1), une planche à talon (7) s'étendant sous-plancher et transversalement entre lesdits au moins deux longerons (5), au moins deux brancards (9, 11, 13) s'étendant sous-plancher en direction de ladite planche à talon (7) dont au moins deux brancards avant (9) disposés de part et d'autre du tunnel (3) central, ledit véhicule comprenant en outre un ou plusieurs dispositifs de renfort (15, 17) choisis parmi au moins un dispositif de contournement (15) et/ou au moins un dispositif d'ancrage (17), le ou les dispositifs de renfort (15, 17) étant des corps allongés comprenant deux extrémités définissant une extrémité avant et une extrémité arrière, une desdites extrémités étant fixée à un brancard (9, 11, 13), et le ou les dispositifs de renforts (15, 17) étant fixés sous le plancher (1) du véhicule et étant agencés pour s'étendre selon une direction faisant un angle avec la direction longitudinale du véhicule, le véhicule est **caractérisé en ce qu'**il comprend au moins un dispositif d'ancrage (17) fixé à un brancard avant (9) par son extrémité avant et à la planche à talon (7) par son extrémité arrière, l'extrémité arrière étant contiguë à un longeron (5),
et/ou le véhicule comprend un brancard sous-plancher intérieur (11) s'étendant parallèlement à un brancard avant (9) et disposé entre ledit brancard avant (9) et le tunnel (3) central, et le véhicule comprend au moins un dispositif d'ancrage (17) fixé à un brancard avant (9) par son extrémité avant et à la planche à talon (7) par son extrémité arrière, l'extrémité arrière étant contiguë audit brancard intérieur (11)..

2. Véhicule selon la revendication 1, **caractérisé en ce qu'**au moins un dispositif de renfort (15, 17) est un corps creux ; de préférence, au moins un dispositif de renfort (15, 17) montre une hauteur inférieure à 30 mm.

3. Véhicule selon l'une des revendications 1 ou 2, **caractérisé en ce qu'**il comprend au moins un dispositif d'ancrage (17) fixé à un brancard avant (9) par son extrémité avant et à la planche à talon (7) par son extrémité arrière ; de préférence, au moins deux dispositifs d'ancrage (17) sont fixés sur un même brancard avant (9).

4. Véhicule selon l'une des revendications 1 à 3, **caractérisé en ce que** le véhicule comprend une traverse d'assise arrière disposée sur le plancher, une desdites extrémités du ou des dispositifs de renfort (15, 17) est fixée à un brancard avant (9) en dessous de la traverse d'assise arrière et/ou **en ce que** le ou les dispositifs de renfort (15, 17) sont des profilés en forme de U et au moins une des extrémités desdits profilés montre un coude (19).

5. Véhicule selon l'une des revendications 1 à 4, **caractérisé en ce que** le ou les dispositifs de renfort (15, 17) sont des pièces en acier ; de préférence, des pièces en acier montrant une résistance à la traction comprise entre 400 et 1200 MPa telle que déterminée par la norme ISO 6892-1.

6. Véhicule selon l'une des revendications 1 à 5, **caractérisé en ce qu'**il comprend en outre au moins un brancard sous-plancher extérieur (13) s'étendant parallèlement à un brancard avant (9) et disposé entre ledit brancard avant (9) et un longeron (5), et **en ce qu'**il comprend au moins un dispositif de contournement (15) fixé à un brancard extérieur (13) par une de ses extrémités ; de préférence, au moins un dispositif de contournement (15) est fixé au brancard extérieur (13) par son extrémité avant.

7. Véhicule selon la revendication 6, **caractérisé en ce qu'**il comprend en outre une batterie (21) implantée sous le plancher, **en ce qu'**au moins un brancard avant (9) ou un brancard extérieur (13) est un brancard coupé ; un brancard coupé comprenant deux parties définissant une partie avant et une partie arrière entre lesquelles la batterie (21) est disposée, la partie arrière comprenant une extrémité arrière fixée à la planche à talon (7), et **en ce qu'**au moins un dispositif de contournement (15) est fixé à la partie arrière d'un brancard coupé ; de préférence, au moins un brancard coupé est un brancard avant (9).

8. Véhicule selon la revendication 6 ou 7, **caractérisé en ce qu'**il comprend au moins un dispositif de renfort mixte comprenant un dispositif de contournement (15) et un dispositif d'ancrage (17) placés bout à bout de manière à former une pièce unique, le ou les dispositifs de renfort mixtes étant fixés à un brancard extérieur (13) par leur extrémité avant et à la planche à talon (7) par leur extrémité arrière ; de préférence, au moins un dispositif de renfort mixte est configuré pour enjamber un brancard avant (9) et s'y fixer.

9. Véhicule selon l'une des revendications 1 à 5, **caractérisé en ce qu'**il comprend une batterie (21) logée à l'arrière de la planche à talon (7) et **en ce qu'**au moins deux dispositifs d'ancrage (17) sont fixés sur un même brancard avant (9).

## Patentansprüche

1. Hybrid-Elektromotorfahrzeug mit einem Boden (1) mit einem zentralen Tunnel (3), mindestens zwei Längsholme (5), die jeweils an jeder Seitenkante des Bodens (1) angeordnet sind, einem Fersenbrett (7), das sich unter dem Boden und quer zwischen den mindestens zwei Holmen (5) erstreckt, mindestens zwei sich unter dem Boden in Richtung des Fersenbretts (7) erstreckende Streben (9, 11, 13), von denen mindestens zwei vordere Streben (9) beidseits des Tunnels (3) angeordnet sind Zentrale, wobei das Fahrzeug ferner eine oder mehrere Verstärkungsvorrichtungen (15, 17) aufweist, die aus mindestens einer Umgehungsvorrichtung (15) und/oder mindestens einer Verankerungsvorrichtung (17) ausgewählt sind, wobei die mindestens eine Verstärkungsvorrichtung (15, 17) längliche Körper mit zwei Enden ist, die ein vorderes Ende und ein hinteres Ende definieren, wobei eines der Enden an einer Tragleiste (9, 11, 13) befestigt ist, und wobei die mindestens eine Verstärkungsvorrichtung (15, 17) unter dem Fahrzeugboden (1) befestigt ist und angeordnet ist, um sich in einer Winkelrichtung zu erstrecken Mit der Längsrichtung des Fahrzeugs ist das Fahrzeug **dadurch gekennzeichnet, dass** es mindestens eine Verankerungsvorrichtung (17) aufweist, die an seinem vorderen Ende an einer vorderen Trage (9) und an seinem hinteren Ende an dem Fersenbrett (7) befestigt ist, wobei das hintere Ende an einen Längsträger (5) angrenzt,
Und/oder das Fahrzeug umfasst eine sich parallel zu einer vorderen Trage (9) erstreckende, zwischen der vorderen Trage (9) und dem Mitteltunnel (3) angeordnete untere Trage (11), und das Fahrzeug umfasst mindestens eine Verankerungsvorrichtung (17), die mit ihrem vorderen Ende an einer vorderen Trage (9) und mit ihrem hinteren Ende an dem Fersenbrett (7) befestigt ist, wobei das hintere Ende an die innere Trage (11) angrenzt.

2. Fahrzeug nach Anspruch 1, **dadurch gekennzeichnet, dass** mindestens eine Verstärkungseinrichtung (15, 17) ein Hohlkörper ist; vorzugsweise mindestens eine Verstärkungseinrichtung (15, 17) eine Höhe von weniger als 30 mm aufweist.

3. Fahrzeug nach einem der Ansprüche 1 oder 2, **dadurch gekennzeichnet, dass** es mindestens eine Verankerungsvorrichtung (17) umfasst, die an ihrem vorderen Ende an einem vorderen Tragrand (9) und an ihrem hinteren Ende an dem Fersenbrett (7) befestigt ist; vorzugsweise sind mindestens zwei Verankerungsvorrichtungen (17) an einem gleichen vorderen Tragrand (9) befestigt.

4. Fahrzeug nach einem der Ansprüche 1 bis 3, **dadurch gekennzeichnet, dass** das Fahrzeug einen hinteren Sitzquerträger aufweist, der auf dem Boden angeordnet ist, wobei eines der Enden der Verstärkungseinrichtung(en) (15, 17) an einem vorderen Untergestell (9) unterhalb des hinteren Sitzquerträgers befestigt ist, und/oder dass die Verstärkungseinrichtung(en) (15, 17) U-förmige Profile sind und mindestens eines der Enden der Profile einen Knick (19) aufweist.

5. Fahrzeug nach einem der Ansprüche 1 bis 4, **dadurch gekennzeichnet, dass** die Verstärkungseinrichtung bzw. die Verstärkungseinrichtungen (15, 17) Stahlteile sind; vorzugsweise Stahlteile mit einer Zugfestigkeit zwischen 400 und 1200 MPa, wie durch die Norm ISO 6892-1 bestimmt.

6. Fahrzeug nach einem der Ansprüche 1 bis 5, **dadurch gekennzeichnet, dass** es ferner mindestens eine äußere Unterbodenstütze (13) umfasst, die sich parallel zu einer vorderen Stütze (9) erstreckt und zwischen der vorderen Stütze (9) und einem Längsträger (5) angeordnet ist, und dass es mindestens eine Umgehungseinrichtung (15) umfasst, die an einem ihrer Enden an einer äußeren Stütze (13) befestigt ist; vorzugsweise mindestens eine Umgehungseinrichtung (15) ist an ihrem vorderen Ende an der äußeren Stütze (13) befestigt.

7. Fahrzeug nach Anspruch 6, **dadurch gekennzeichnet, dass** es ferner eine Batterie (21) aufweist, die unter dem Boden angeordnet ist, dass mindestens eine vordere Tragleiste (9) oder eine äußere Tragleiste (13) eine abgeschnittene Tragleiste ist; eine abgeschnittene Tragleiste mit zwei Abschnitten, die einen vorderen Abschnitt und einen hinteren Abschnitt definieren, zwischen denen die Batterie (21) angeordnet ist, wobei der hintere Abschnitt ein hinteres Ende aufweist, das an dem Fersenbrett (7) befestigt ist, und dass mindestens eine Umgehungseinrichtung (15) an dem hinteren Abschnitt einer abgeschnittenen Tragleiste befestigt ist; Vorzugsweise ist mindestens eine abgeschnittene Trage eine Fronttrage (9).

8. Fahrzeug nach Anspruch 6 oder 7, **dadurch gekennzeichnet, dass** es mindestens eine gemischte Verstärkungsvorrichtung umfasst, die eine Umgehungsvorrichtung (15) und eine Verankerungsvorrichtung (17) umfasst, die so aneinanderstoßend angeordnet sind, dass sie ein einziges Teil bilden, wobei die mindestens eine gemischte Verstärkungsvorrichtung mit ihrem vorderen Ende an einer äußeren Tragleiste (13) und mit ihrem hinteren Ende an dem Fersenbrett (7) befestigt ist; vorzugsweise ist mindestens eine gemischte Verstärkungsvorrichtung so konfiguriert, dass sie eine vordere Tragleiste (9) übergreift und daran befestigt ist.

9. Fahrzeug nach einem der Ansprüche 1 bis 5, **dadurch gekennzeichnet, dass** es eine Batterie (21) umfasst, die auf der Rückseite des Fersenbretts (7) untergebracht ist, und dass mindestens zwei Verankerungsvorrichtungen (17) an ein und demselben vorderen Traggestell (9) befestigt sind.

## Claims

1. Hybrid electric motor vehicle comprising a floor (1) with a central tunnel (3), at least two longitudinal side members (5) disposed respectively at the level of each lateral edge of the floor (1), a heel board (7) extending under the floor and transversely between said at least two side members (5), at least two stretchers (9, 11, 13) extending under the floor at the management of said heel board (7), including at least two front stretchers (9) disposed on either side of the central tunnel (3), said vehicle further comprising one or more reinforcing devices (15, 17) chosen from at least one bypass device (15) and/or at least one anchoring device (17), the reinforcing device(s) comprising elongated bodies two ends defining a front end and a rear end, one of said ends being fixed to a stretcher (9, 11, 13), and the reinforcing device(s) (15, 17) being fixed under the floor (1) of the vehicle and being arranged to extend along a management forming an angle with the longitudinal management of the vehicle, the vehicle is **characterised in that** it comprises at least one anchoring device (17) fixed to a front stretcher (9) by its front end and to the heel board (7) by its rear end, the rear end being contiguous with a side member (5),
and/or the vehicle comprises an inner sub-floor stretcher (11) extending parallel to a front stretcher (9) and arranged between said front stretcher (9) and the centre tunnel (3), and the vehicle comprises at least one anchoring device (17) fixed to a front stretcher (9) by its front end and to the heel board (7) by its rear end, the rear end being contiguous to said inner stretcher (11).

2. Vehicle according to Claim 1, **characterised in that** at least one reinforcing device (15, 17) is a hollow body; preferably, at least one reinforcing device (15, 17) has a height of less than 30 mm.

3. Vehicle according to one of Claims 1 or 2, **characterised in that** it comprises at least one anchoring device (17) fixed to a front stretcher (9) by its front end and to the heel board (7) by its rear end; preferably, at least two anchoring devices (17) are fixed to the same front stretcher (9).

4. Vehicle according to one of Claims 1 to 3, **characterised in that** the vehicle comprises a rear seat cross-member arranged on the floor, one of said ends of the reinforcing device(s) (15, 17) is fixed to a front stretcher (9) below the rear seat cross-member and/or **in that** the reinforcing device(s) (15, 17) are U-shaped sections and at least one of the ends of said sections shows an elbow (19).

5. Vehicle according to one of Claims 1 to 4, **characterised in that** the reinforcing device(s) (15, 17) are steel components; preferably, steel components having a tensile strength of between 400 and 1200 MPa as determined by ISO 6892-1.

6. Vehicle according to one of Claims 1 to 5, **characterised in that** it further comprises at least one outer sub-floor stretcher (13) extending parallel to a front stretcher (9) and arranged between said front stretcher (9) and a spar (5), and **in that** it comprises at least one bypass device (15) fixed to an outer stretcher (13) by one of its ends; preferably, at least one bypass device (15) is fixed to the outer stretcher (13) by its front end.

7. Vehicle according to Claim 6, further comprising a battery (21) implanted under the floor, wherein at least one front stretcher (9) or one outer stretcher (13) is a cut stretcher; a cut stretcher comprising two parts defining a front part and a rear part between which the battery (21) is arranged, the rear part comprising a rear end fixed to the heel board (7), and wherein at least one bypass device (15) is fixed to the rear part of a cut stretcher; preferably, at least one cut stretcher is a front stretcher (9).

8. Vehicle according to Claim 6 or 7, **characterised in that** it comprises at least one combination reinforcement device comprising a bypass device (15) and an anchoring device (17) placed end to end so as to form a single component, the combination reinforcement device(s) being fixed to an outer stretcher (13) by their front end and to the heel board (7) by their rear end; preferably, at least one combination reinforcement device is configured to straddle and attach to a front stretcher (9).

9. Vehicle according to one of Claims 1 to 5, **characterised in that** it comprises a battery (21) housed in the rear of the heel board (7) and **in that** at least two anchoring devices (17) are fixed to the same front stretcher (9).
